# EUROPEAN PATENT APPLICATION

(11) **EP 2 551 750 A1**
(43) Date of publication of application: **30.01.2013**
(21) Application number: 11175359.6
(22) Date of filing: 26.07.2011
(51) Int. Cl.: G06F 3/041, H04H 60/04, G06F 3/048

(54) **Input device and mixing console**

(71) Applicant: Studer Professional Audio GmbH, 8105 Regensdorf (CH)
(72) Inventor: Meier, Detlef, 8712 Stäfa (CH)
(74) Representative: Bertsch, Florian Oliver

(57) **Abstract**

An input device for a mixing console is provided. The input device includes a multi touch screen adapted to detect multiple simultaneous touches to a surface of the multi touch screen. A display controller of the input device is configured to display a graphical control element on the multi touch screen. The graphical control element is operable by touch input along an input trajectory on the surface of the multi touch screen. A guiding element disposed on the surface of the multi touch screen is configured to provide tactile guidance along the input trajectory.

## Description

### Field of the Invention

The invention relates to an input device for a mixing console and to a mixing console, in particular to an audio and/or video mixing console.

### Background

Modern electronic devices often require a plurality of control elements for an adjustment of parameters. An input unit for such electronic device may be provided in the form of a console on which a plurality of mechanical control elements are arranged. Such an input device may be used to control for example audio equipment, video equipment or the like. Control elements employed in these systems are often analogue elements, such as mechanical sliders and rotary knobs, with a predefined functionality. Accordingly, applications of such input device are limited as the functionality cannot be changed or adjusted. Electromechanical input elements, such as rotary encoders, further suffer from the drawback that they are complex and expensive, as well as difficult to mount.

Further, touch screens are known in the art as input devices. These are often implemented in compact electronic devices, such as personal digital assistant (PDA) or more recently in mobile phones. Several technologies for detecting a touch or a near touch to a surface are known in the art. Examples are a resistive touch screen panel composed of several layers, wherein the layers are contacted at a certain point upon touching. A change in the electrical current through the layers is detected as a touch event and a controller derives the position on the panel where the touch has occurred.

For overcoming the drawbacks of analogue mechanical control elements, the control elements can be implemented as graphical control elements of a graphical user interface which can be operated by means of the touch screen. The adjustment of a graphical control element on the touchscreen, e.g. with a finger or a pen, requires substantial motorical skills from a user. Further, touch screens often do not provide the possibility of a precise input, in particular if the graphical control elements are small. Difficulties in adjusting a parameter and operating errors, such as an unwanted operation of a graphical control element can result. Also, the user has to focus on the screen in order to operate a graphical control element.

It is thus desirable to improve the operation of graphical control elements, in particular to enable a more precise and less error prone operation of graphical control elements by user input.

### Summary

Accordingly, there is a need for improving the user input for a mixing console and to mitigate at least some of the drawbacks mentioned above.

This need is met by the features of the independent claims. The dependent claims describe preferred embodiments of the invention.

According to an embodiment, an input device for a mixing console is provided. The input device comprises a multi touch screen adapted to detect multiple simultaneous touches to a surface of the multi touch screen and a display controller configured to display a graphical control element on the multi touch screen. The graphical control element is operable by touch input along an input trajectory on the surface of the multi touch screen. The input device further comprises a guiding element configured to provide tactile guidance along the input trajectory, the guiding element being disposed on the surface of the multi touch screen and comprising at least a physical barrier on either side of the input trajectory, the physical barriers extending along the input trajectory.

Operation of the graphical control element can be facilitated by the guiding element. This can make the adjustment of a parameter by means of the graphical control element more precise. In particular, the user may be relieved from the need to observe the screen when operating the graphical control element, as the user's finger or other input means is guided along the input trajectory by the guiding element. Also, accidental operation of an adjacent graphical control element may be prevented this way. The user is enabled to easily locate the graphical control element on the multi touch screen and to operate it along the intended path. As a multi touch screen is used, plural graphical control elements can be operated simultaneously. The input device may be configured so that the graphical control element is operable by movement of a user's finger along the input trajectory on the surface of the multi touch screen.

In an embodiment, the graphical control element comprises a fader, the input trajectory of the fader being a straight line. The setting of the fader is adjustable by touch input along the straight line. The parameter controlled by the fader may for example be set by the user sliding his finger along the straight line or touching a position on the straight line. The current setting of the fader may be indicated by a graphical fader cap, which can be moved in correspondence with a sliding movement of the users finger along the straight line. As the guiding element provides tactile feedback and physical guidance, a precise execution of a sliding gesture along the straight line becomes possible. In particular, it may be prevented that the finger leaves the input trajectory during the sliding movement. Blind operation of the graphical fader is thus enabled, and the accidental actuation of e.g. neighbouring faders is prevented.

The guiding element may further comprise a physical barrier disposed adjacent to each end of the input trajectory. If the input trajectory is a straight line, a physical barrier that runs perpendicular to the straight line may be provided adjacent to each end point of the straight line. The physical barriers of the guiding element may in such case form a rectangle inside which the input trajectory is located. Thus, a user may also receive tactile feedback if the start or end point of the input trajectory is reached (behind which a touch input may no longer be registered as an operation of the graphical control element).

In an embodiment, the physical barriers are implemented as ridges protruding from the surface of the multi touch screen. Note that the term ridge does not imply any particular shape, but may be any type of elevation or protrusion on the surface of the multi touch screen extending along the input trajectory, such as a rib, a bead or the like. Ridges can provide a good tactile guidance while they can be easy to manufacture. Further, their shape can be adjusted as desired.

The physical barriers extending on either side of the input trajectory may protrude from the surface of the multi touch screen and may be spaced apart so as to form a channel. The bottom of the channel is formed by the surface of the multi touch screen. The channel extends along the input trajectory. In particular, the bottom of the channel may not be covered by the ridges (i.e. the ridges on either side of the graphical control element can be spaced apart so that they leave an uncovered portion of the touch screen between them). This may provide a better response for a touch input to the touch screen.

The physical barriers may protrude from the surface of the multi touch screen and have a cross section with a flank sloping from a point located most distant to the surface of the multi touch screen towards the surface of the multi touch screen in the direction of the graphical control element. The other flank may slope away from graphical control element, or may run at a steeper angle or even perpendicular to the surface of the multi touch screen. As an example, if graphical control elements are located on both sides of the physical barrier, the cross section may have similar shaped flanks on both sides. If no further graphical control element is located on one side of the physical barrier, the flank on this side may have a steeper slope. This way, a comfortable and ergonomic tactile feedback can be provided for the operation of the graphical control element, while space on the multi touch screen can be conserved.

In an embodiment, the surface of the multi touch screen is a substantially flat surface, and the physical barriers are mounted mechanically to or adhered to the surface of the multi touch screen. Assembly of the input device is thus facilitated and the guiding element can be provided cost efficiently.

In an embodiment, the guiding element comprises a groove or recess formed in the surface of the multi touch screen and extending along the input trajectory. The side walls of the groove form the physical barriers on either side of the input trajectory. Providing a groove as a guide element conserves space on the multi touch screen. No additional elements may need to be provided for manufacturing the guide element, as the groove may for example be cut directly into the top surface of the multi touch screen.

According to a further embodiment, the physical barriers extending on either side of the input trajectory are integrally formed with the surface of the multi touch screen. When manufacturing the top surface of the multi touch screen, the guiding element may be directly included therein, for example as a groove of as ridges formed on the surface.

The physical barriers may be made of glass or synthetic material. The physical barriers may be transparent, i.e. they may be made out of a transparent material.

According to a further embodiment, the graphical control element comprises a dial or a rotary knob, the input trajectory being a curved trajectory, in particular a circular trajectory. The setting of the dial or the rotary knob is adjustable by touch input along the curved trajectory. The graphical control element may for example be operable by a sliding movement of the users finger along the curved trajectory. The guiding element can thereby ensure that the finger stays on the curved trajectory, i.e. above the area of the multi touch screen that is active for registering an operation of the graphical control. An accidental leaving of the active area which would result in the interruption of the input may thus be prevented. The physical barriers may for example have the shape of two concentric circles.

The input device may also comprise a graphical control element in form of a button or knob, which is operable be touch input to the multi touch screen at the position at which the button or knob is displayed. The guiding element may then comprise a physical barrier that extends around the graphical button or knob, in particular around the position at which the graphical button or knob is touch sensitive. As an example, the button or knob may have a graphical representation on the multi touch screen covering a certain area, and the area may be framed by protrusions on or recesses in the surface of the multi touch screen, or a larger recess in the surface may extend over the area. The tactile feedback provided by such guiding element may facilitate the finding and the operation of the graphical button or knob.

In an embodiment, the graphical control element is a first fader. The display controller is configured to display one, two or more further faders adjacent to the first fader. The faders are operable simultaneously by the multi touch screen, and the input device comprises a guiding element for each of the faders. Thus, plural parameters may be adjusted simultaneously by a user by means of the plural faders. As each fader is provided with a guide element, the user can adjust the faders without looking at the multi touch screen. An accidental sliding of a finger from one fader to a neighbouring fader can be prevented efficiently.

The physical barriers may extend on either side of the input trajectory of each fader, wherein neighboring faders are separated by the same single physical barrier. For example, the same ridge/elevation may separate two faders, or the separating wall of two neighbouring grooves may separate two faders. A compact arrangement of plural faders placed side by side can thus be achieved.

The multi touch screen may be a capacitive multi touch screen, or may be an optical multi touch screen including an array of optical sensor pixels, the optical sensor pixels being located adjacent to display pixels. Other configurations of the multi touch screen are also conceivable, such as a total internal reflection based touch screen, an infrared touch screen or the like.

The graphical control element may be part of a graphical user interface (GUI), in particular of a GUI of a mixing application which uses the input device for user input (i.e. as a HMI, human machine interface). The mixing application may in particular be an audio and/or video mixing application of the mixing console.

A further embodiment provides a fader bay comprising an input device in any of the above outlined configurations. The graphical control element is a fader and the input trajectory is a straight line, the setting of the fader being adjustable by touch input along the straight line. The display controller is configured to display plural of such faders adjacent to each other on the multi touch screen. The fader bay comprises a guiding element for each of the faders. The fader bay provides an ergonomic input when mixing multiple audio channels simultaneously and without eye contact to the multi touch screen.

According to a further embodiment, a mixing console is provided. The mixing console comprises an input device according to any of the above outlined configurations. The mixing console may be an audio and/or video mixing console. With such mixing console, advantages similar to the ones outlined further above may be achieved. In particular, the mixing console may include a fader bay comprising several of the graphical control elements each being provided with a respective guiding element.

The features of the embodiments described above and further below may be combined with each other unless noted to the contrary.

### Brief Description of the Drawings

The foregoing and other features and advantages of the invention will become further apparent from the following detailed description read in conjunction with the accompanying drawings. In the drawings like reference numerals refer to like elements.
Fig. 1 is a schematic diagram illustrating an input device according to an embodiment of the invention.
Fig. 2 is a schematic diagram illustrating a top view of an input device according to an embodiment of the invention.
Fig. 3 is a schematic diagram illustrating a sectional side view of the multi touch screen of the input device of Fig. 2.
Fig. 4 is a schematic diagram illustrating a sectional side view of a multi touch screen of an input device according to a further embodiment of the invention.
Fig. 5 is a schematic diagram illustrating a top view of an input device according to an embodiment of the invention.

### Detailed Description

It is to be understood that the following description of embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art.

The partitioning of embodiments in function blocks or units shown in the drawings is not to be construed as indicating that these units necessarily are implemented as physically separate units, but functional blocks or units shown or described may be implemented as separate units, circuits, chips or circuit elements, but one or more functional blocks or units may as well be implemented in a common circuit, chip, circuit element or unit.

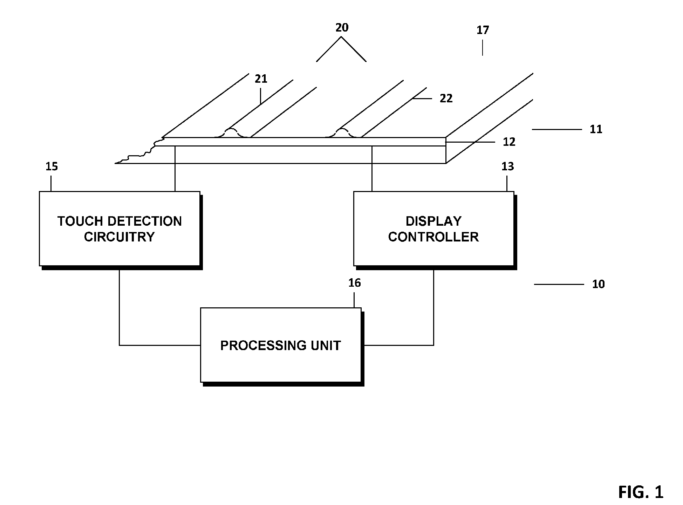

The schematic diagram of Fig. 1 shows an input device 10 according to an embodiment of the invention. The input device 10 comprises a multi touch screen 11. A display controller 14 interfacing the multi touch screen 11 is adapted to control the display of an image on the multi touch screen, in accordance with instructions received from processing unit 16 which it interfaces.

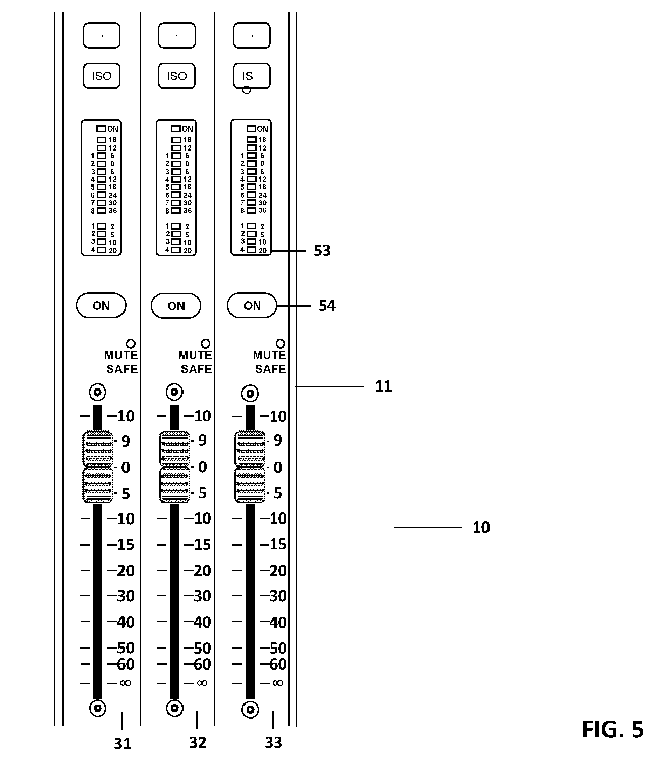

Display controller 14 may for example comprise a graphics processor or the like. It can be adapted to display any kind of information on multi touch screen 11, such as know from personal computing devices. Display controller 14 is in particular adapted to display one or more graphical control elements on multi touch screen 11. The number and types of control elements to be displayed is configured in accordance with the particular application. In an audio mixing application, several graphical control elements in form of faders may be displayed next to each other, together with graphical buttons, as indicated in Fig. 5. Besides graphical control elements, information may certainly be given out on the multi touch screen 11. As an example, the type of parameter that is controlled by a graphical control element may be indicated and the current setting of the parameter may be displayed, or the actual signal level on an audio channel that is controlled by the graphical control element can be indicated. For this purpose, an information display region can be provided on the screen, such as region 53 in Fig. 5. Note that these are only few examples given for the purpose of illustration.

The input device 10 further comprises a touch detection circuitry 15 interfacing the multi touch screen 11 and the processing unit 16. The touch detection circuitry 15 is adapted to detect and evaluate touches to a surface 17 of the multi touch screen 11. It may for example receive electric signals from sensors of the multi touch screen and evaluate the signals in order to determine a position at which the touch has occurred. It is in particular capable of resolving the position of multiple simultaneous touches to the multi touch screen 11. A touch to the surface 17 with two or more fingers or a gesture performed by a finger on surface 17 can thus be detected and evaluated. Touch detection circuitry 15 may for example detect the touches as distinct input events and may supply this information to the processing unit 16 for further evaluation.

Processing unit 16 is configured to coordinate the displaying of graphical control elements in accordance with the respective application and to interpret input events detected by touch detection circuitry 15. Processing unit 16 initiates the presentation of a particular graphical control element at a particular position and with a particular size on multi touch screen 11. As the processing unit 16 knows the type, size and position of the graphical control element, it can determine if a input event (i.e. a touch to a particular position on multi touch screen 11) corresponds to an actuation of the graphical control element. As an example, if the touch occurs at a position at which a graphical button is located, the touch may be interpreted as a push of the button, and a corresponding action may be initiated by processing unit 16. Processing unit 16 further links the graphical control element to a function or parameter of an underlying application, e.g. an audio and/or video mixer, which uses the input device 10 as a user interface.

Processing unit 16 can comprise a memory having software code portions stored therein and a central processing unit which operates according to the stored software code portions. The software code portions comprise control instructions for displaying the different types of graphical control elements, in particular the control elements disclosed herein.

Processing unit 16 is configured to display a graphical control element on the multi touch screen 11 that is operable by a touch input along an input trajectory (or input path) on the surface of the multi touch screen. This means that the graphical control element can be operated by moving an user controlled object, such as the user's finger or a stylus, along the input trajectory. Operating the graphical control element means that the graphical control element is actuated, thereby adjusting the setting of a parameter associated with the graphical control element, or executing an associated function.

The parameter controlled by the graphical control element may be changed in accordance with the movement of the user controlled object, for example with the distance moved. Additionally or alternatively, the starting point and the end point of the movement of the user controlled object may determine the setting of the graphical control element. The value of the controlled parameter may for example correspond to the position at which the movement is stopped.

The input trajectory essentially defines a path along which the graphical control element on the multi touch screen can be operated, i.e. an active region. A touch input into this region will generally lead to a change in the setting of the graphical control element (with some exceptions, such as when a position corresponding to the current setting is touched, when the graphical control element has reached a limit for its setting or when it is disabled or the like). The graphical control element can have a number of discrete settings along the input trajectory or may be operable almost continuously, wherein the resolution of the touch position sensing of the multi touch screen and the image resolution of the multi touch screen pose a limit to a continuous operation.

The processing unit 16 can in particular be configured to display a fader, e.g. in form of a graphical slider, and/or a rotary knob on multi touch screen 11 and to determine and interpret an operation of these controls. In case of a fader, the input trajectory is a straight line. It is the path that the user's finger can take on the screen for operating the fader, i.e. along which the graphical control element is operable by touch input. As an example, the fader can be configured such that by touching a graphical fader cap of the fader and moving the finger along the input trajectory for a distance, the fader cap will follow the movement of the finger, resulting in a corresponding adjustment of the parameter that is being controlled. Moving the finger on the touch screen in another direction (not along the input trajectory) will generally result in no adjustment of the fader or in the finger leaving the active area of the fader. In case of a rotary knob, the input trajectory may be circular. A graphical control element in form of a rotary knob can be configured such that moving the finger along the circle will lead to an operation of the rotary knob and thus to an adjustment of the controlled parameter.

The input device 10 is operable to enable the adjustment of parameters, it can for example be configured to enable the adjustment of volume, gain, equalizers or the like of an audio or video mixer by means of the different types of graphical control elements on multi touch screen 11.

The multi touch screen 11 may have different configurations. In the example of Fig. 1, the touch screen comprises a touch panel 12 and a display panel 13. The touch panel may be a capacitive touch panel and may be integrated with display panel 13.

The capacitive touch panel may for example comprise a capacitive sensing layer of a metal oxide, such as indium tin oxide, which conducts an electrical current across the sensor panel which is applied by electrodes on each corner of the panel. As an example, a square wave voltage may be applied. When the touch panel is touched, a charge transport occurs, which can be measured in form of a current at the corners of the panel. The position of the touch event can be determined by evaluating the resulting currents at the corners of the panel, which may be performed by the touch detection circuitry 15. To detect multiple simultaneous touches, the touch panel may comprise a plurality of transparent sensor nodes which may again be formed of a conductive medium such as a metal oxide, spatially separated into electrodes and traces. Different coordinates on the display may then be represented by the different electrodes, and the traces are used to connect the electrodes to a capacitive sensing circuit which can be comprised in the touch detection circuitry 15. Accordingly, a change of a capacitance occurring at a particular electrode can be recognized, and by using a plurality of electrodes, the positions of simultaneously occurring touches can be resolved. A touch by a finger can be detected as a change in capacitance at the sensing node allowing the determination of the position of the input event. A movement of the finger results in a change of capacitance of another sensing node, thus enabling the detection of the finger's path.

Other implementations of the multi touch screen 11 are also conceivable. It may for example not comprise a separate touch panel and display panel, but these may be integrated in a single panel. As an example, an optical multi touch screen may be used which comprises display pixels and optical sensor pixels located adjacent to the display pixels. A shadow cast be the user's finger or another user controlled object can be detected by the optical sensor pixels. The spatial resolution of the touch detection depends on the number and density of the optical sensor pixels provided in the multi touch screen. It can thus be set to rather high resolutions. Besides detecting a shade, configurations are also conceivable in which the surface 17 is actively illuminated and a reflection from a touching finger is detected, or in which light emitted by the display pixels and reflected by a touching input object is detected.

To facilitate the operation of a graphical control element provided on multi touch screen 11, the input device 10 comprises a guiding element 20. The guiding element 20 includes two physical barriers 21, 22 which are spaced apart and extend along the input trajectory of the graphical control element.

In Fig. 1, the physical barriers 21, 22 are formed as elongate protrusions on surface 17 of multi touch screen 11. Each protrusion may have the form of a ridge, a rib or the like. The physical barriers on either side of the input trajectory do not need to have the same shape. The shape may depend on whether the input trajectory is curved or straight, and whether a graphical input element is provided on one or on both sides of the physical barrier. If the input trajectory is not a closed trajectory, such as a circle, but an open trajectory, such as a straight line of a defined length, further physical barriers can be provided at both ends of the input trajectory. These may be perpendicular to the physical barriers that extend along the input trajectory.

The physical barriers are adapted to provide tactile guidance to a user controlled object by means of which the user operates the graphical control element, e.g. to the user's finger, a stylus or the like. First, the guiding element enables the user to find the graphical control element without having to look at the multi touch screen 11. Due to the flat touch surface on conventional touch screens, graphical control elements can not be found without looking at the screen, which is particularly disadvantageous in situations in which plural control elements need to be controlled in short periods of time and almost simultaneously, such as in audio mixing applications. By providing the physical barriers 21, 22 around one or several graphical control elements on the multi touch screen 11, the graphical control elements can be easily found and can be accessed by multiple fingers of a user without eye contact.

Second, as the physical barriers provide guidance along the input trajectory, the graphical control elements can be operated reliably without the need to look at them. On a conventional touch screen, if the user operates a graphical slider without eye contact, the user's finger may move at a small angle to the input trajectory, so that after a distance, the finger leaves the active area of the graphical control element and the operation thereof is stopped. In the input device 10, this can be avoided as by the tactile feedback from the physical barriers 21 and 22, the user immediately notices if the finger leaves the input trajectory. The physical barriers provide a orientation for the user, so that the user is enabled to securely operate the graphical control element along the intended input path. A maloperation of the graphical control element can thus be avoided.

In Fig. 1, the input trajectory extends between the physical barriers 21 and 22 and parallel to these. The region that is active for operating the graphical control element can be the whole region between the physical barriers 21, 22 or a central part thereof.

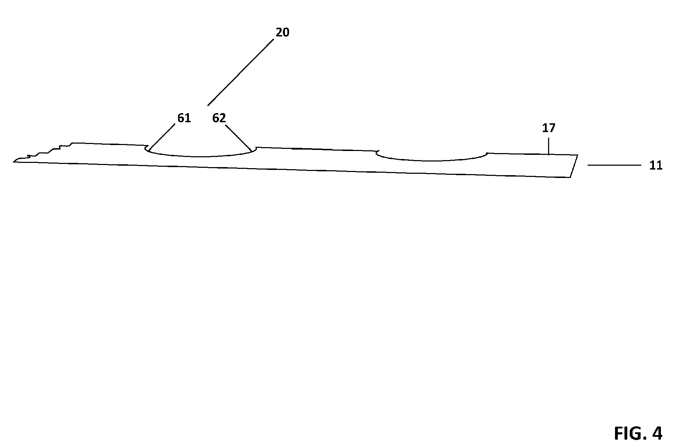

It should be clear that the guiding element 20 may be implemented differently, as long as it comprises physical barriers that provide a guidance to a user controlled object along the input trajectory. A further exemplary implementation of guiding element 20 is described below with respect to Fig. 4.

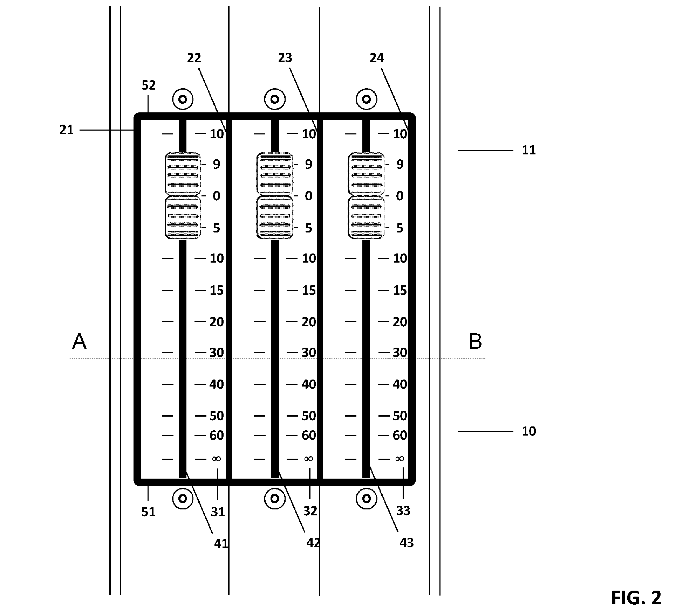

Fig. 2 is a top view of a section of multi touch screen 11 of the input device 10 of Fig. 1 in a situation in which three graphical control elements 31, 32 and 33 are displayed on the multi touch screen 11. Each graphical control element comprises a graphical representation of a fader with a scale and a track along which a graphical fader cap can be moved. The input device 10 thus realizes a fader bay. The possible movement of the fader cap of the fader defines the input trajectory 41, 42, 43 of the respective graphical control element 31, 32, 33. On the multi touch screen 11, physical barriers 2 1, 22, 23 an d 24 are provided on each side of the graphical control elements 31, 32, 33 , the physical barriers extending parallel to the input trajectories 41, 42, 43. Further physical barriers 51, 52 are provided on the upper and the lower ends of the graphical control elements 31, 32, 33. Each graphical control element is thus completely surrounded by physical barriers.

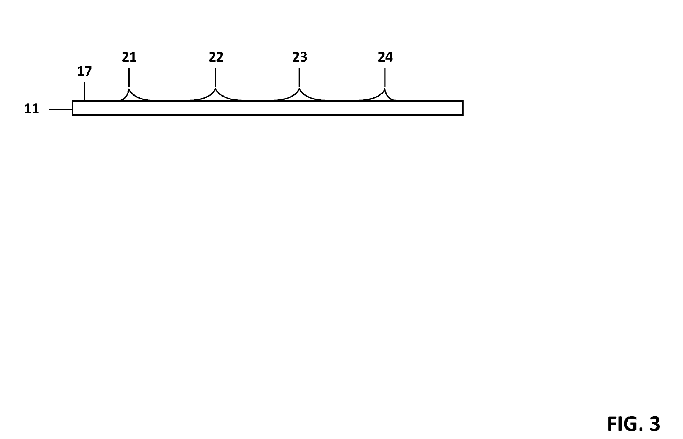

Fig. 3 is a sectional side view along the line A-B of Fig. 2 which illustrates a possible configuration of the physical barriers 21-24 of Fig. 2. As can be seen, the physical barriers 21-24 are ridges that protrude from the surface 17 of the multi touch screen 11. Physical barriers 21 and 24 only border one graphical control element, whereas physical barriers 22 and 23 have a graphical control element on either side, as can be seen in Fig. 2. Physical barriers 22 and 23 are thus symmetrical, while physical barriers 21 and 24 have a steeper slope on their outer side, thereby conserving space on the multi touch screen 11. By the shape of the physical barriers, the finger(s) are naturally positioned at the center of the graphical control element on the input trajectory, and guided along the input trajectory when the fingers are moved.

As can be seen from Figs. 2 and 3, a user will feel the physical barriers 21-24 when he slides the finger across multi touch screen 11 and thus immediately recognize where the faders 31, 32 and 33 are located. The user can now position his fingers blindly on the faders. As the physical barriers provide tactile guidance, the user can operate the faders blindly by sliding the fingers along the input trajectories 41, 42 and 43, without the risk of leaving the trajectories and thus the active operating region of the respective graphical control elements.

Different modes of operation are conceivable. In one example, the current position of the graphical control element, e.g. the position of the fader cap, does not matter for the operation of the fader. This is for example an application in which a parameter, e.g. an audio level is supposed to be changed by the touch input. The touch input can be a moving up/down gesture along the input trajectory. Adjustment of the parameter may be performed by moving the finger up or down. Thus, the starting position of the finger (where the finger is put first) is not relevant. In the example of a fader, the operation may be as follows: For fading down, a position near the top end of the graphical fader can be touched and the finger can be moved down along the input trajectory. For fading up, a position near the bottom end can be touched and the finger can be moved up along the input trajectory. For a fine tuning, any position within the active region of the fader may be touched.

By providing tactile guidance for adjacent graphical control elements, a moving together or a relative adjustment of two or more graphical control elements is further facilitated. Adjacent faders may for example be used for fine tuning two guitars.

The current fader level can be indicated by means of the position of the graphical fader cap along the displayed fader scale.

Other modes of operation that are conceivable include a mode in which the setting of the fader jumps to the value corresponding the position at which the graphical fader is first touched, so that the current fader setting always corresponds to the current position of the user's finger along the input trajectory. The graphical fader cap can then always follow the user's finger. Such mode of operation can enable fast adjustments of the controlled parameter.

Fig. 4 illustrates another possible realization of the guiding element 20 which may be used in any of the embodiments disclosed herein. Fig 4 is a sectional side view of the multi touch screen 11, similar to Fig. 3. In this configuration, the guiding element 20 is formed by a recess or groove in the surface 17 of the multi touch screen 11. The groove extends perpendicular to the drawing plane along the input trajectory. The physical barriers 61, 62 of the guiding element 20 extend on either side of the input trajectory and provide tactile guidance. The physical barriers 61, 62 are formed by the side walls of the groove. Similar to the implementation of Fig. 3, the user can easily find the graphical control element associated with guiding element 20 by sliding the finger across multi touch screen 11, and can operate the graphical control element by sliding the finger along the groove, thereby obtaining tactile guidance from side walls 61, 62.

As illustrated, guidance for adjacent graphical control elements can be provided with adjacent recesses or grooves. The grooves can be made by milling or shaping the grooves into surface 17 of multi touch screen 11.

In configurations in which protrusions are used as physical barriers for providing tactile guidance, these may be made in different ways. They may be formed integrally with the surface 17 of the multi touch screen 11, e.g. when manufacturing the glass cover of the multi touch screen. The physical barriers may also be fixedly mounted to the surface 17 of the multi touch screen 11, e.g. by adhering the physical barriers to surface 17 using an adhesive or by mechanically mounting them thereto.

Fig. 5 shows a larger section of the multi touch screen 11 of Figs. 1 and 2. As can be seen, besides the graphical control elements 31, 32, 33, information display region 53 can be displayed on the touch screen 11, which can show actual information on e.g. an audio channel that is being controlled by the graphical control element or a setting of the graphical control element or the like. Furthermore, more and different types of graphical control elements can be provided on the multi touch screen 11. These include buttons 54, for example for switching a particular channel on or off.

It is also conceivable to provide graphical control elements other than sliders in the above embodiments. Examples include a rotary knob which can be operated by a circular movement of the user's finger over a graphical representation of the knob. The guiding element can for example be provided in form of two physical barriers forming concentric circles, with the input trajectory for operating the rotary knob being located between the concentric circles. The users finger is thus guided by the physical barriers along the circular input trajectory, so that a failure safe and simple operation of even a graphical rotary knob becomes possible. The physical barriers could be provided around faders and buttons.

In summary, the present invention provides an input device and a mixing console by means of which an intuitive and ergonomic adjustment of parameters by means of a multi touch screen becomes possible. The guiding element enables the finding the graphical control element without eye contact and the blind operation of the graphical control element.

While specific embodiments of the invention are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. An input device for a mixing console comprising:
- a multi touch screen (11) adapted to detect multiple simultaneous touches to a surface (17) of the multi touch screen (11),
- a display controller (14) configured to display a graphical control element (31) on the multi touch screen (11), the graphical control element (31) being operable by touch input along an input trajectory (41) on the surface (17) of the multi touch screen (11), and
- a guiding element (20) configured to provide tactile guidance along the input trajectory (41), the guiding element (20) being disposed on the surface (17) of the multi touch screen (11) and comprising at least a physical barrier (21, 22) on either side of the input trajectory (41), the physical barriers (21, 22) extending along the input trajectory (41).

2. The input device according to claim 1, wherein the graphical control element (31) comprises a fader, the input trajectory (41) being a straight line, the setting of the fader being adjustable by touch input along the straight line.

3. The input device according to claim 1 or 2, wherein the guiding element further comprises a physical barrier (51, 52) disposed adjacent to each end of the input trajectory (41).

4. The input device according to any of the preceding claims, wherein the physical barriers (21, 22) are ridges protruding from the surface of the multi touch screen.

5. The input device according to any of the preceding claims, wherein the physical barriers (21, 22) extending on either side of the input trajectory (41) protrude from the surface (17) of the multi touch screen (11) and are spaced apart so as to form a channel, the bottom of which is formed by the surface (17) of the multi touch screen.

6. The input device according to any of the preceding claims, wherein the physical barriers (21, 22) protrude from the surface (17) of the multi touch screen (11) and have a cross section with a flank sloping from a point located most distant to the surface of the multi touch screen towards the surface (17) of the multi touch screen (11) in the direction of the graphical control element (31).

7. The input device according to any of the preceding claims, wherein the surface (17) of the multi touch screen (11) is a substantially flat surface, and wherein the physical barriers (21, 22) are mounted mechanically to or adhered to the surface (17) of the multi touch screen.

8. The input device according to any of claims 1-3, wherein the guiding element (20) comprises a groove formed in the surface (17) of the multi touch screen (11) and extending along the input trajectory (41), wherein the side walls (61, 62) of the groove form the physical barriers on either side of the input trajectory (41).

9. The input device according to any of claims 1-6 or 8, wherein the physical barriers (21, 22) extending on either side of the input trajectory are integrally formed with the surface (17) of the multi touch screen (11).

10. The input device according to any of the preceding claims, wherein the graphical control element (31) comprises a dial or a rotary knob, the input trajectory being a curved trajectory, in particular a circular trajectory, the setting of the dial or rotary knob being adjustable by touch input along the curved trajectory.

11. The input device according to any of the preceding claims, wherein the graphical control element (31) is a first fader, the display controller (14) being configured to display one, two or more further faders (32, 33) adjacent to the first fader (31), wherein the faders are operable simultaneously by the multi touch screen (11), the input device (10) comprising a guiding element (20) for each of said faders (31, 32, 33).

12. The input device according to claim 11, wherein said physical barriers (21, 22, 23, 24) extend on either side of the input trajectory of each fader (31, 32, 33), wherein neighboring faders are separated by the same single physical barrier (22, 23).

13. The input device according to any of the preceding claims, wherein the multi touch screen (11) is a capacitive multi touch screen or an optical multi touch screen including an array of optical sensor pixels, the optical sensor pixels being located adjacent to display pixels.

14. A fader bay comprising an input device (10) according to any of the preceding claims, wherein the graphical control element is a fader and wherein the input trajectory (41) is a straight line, the setting of the fader being adjustable by touch input along the straight line, the display controller being configured to display plural of said faders adjacent to each other on the multi touch screen (11), the fader bay comprising a guiding element (20) for each of the graphical faders.

15. A mixing console comprising an input device (10) according to any of claims 1-13.
